(19) Europäisches Patentamt
European Patent Office
Office européen des brevets

(11) EP 2 036 927 B1

(12) **EUROPEAN PATENT SPECIFICATION**

(45) Date of publication and mention of the grant of the patent:
**10.11.2010 Bulletin 2010/45**

(51) Int Cl.:
***C08F 2/00*** *(2006.01)* ***C08F 12/00*** *(2006.01)*

(21) Application number: **08015934.6**

(22) Date of filing: **10.09.2008**

(54) **Ionic polymer particle dispersion liquid and method for producing the same**

Ionische Polymerteilchenverteilungsflüssigkeit und Herstellungsverfahren dafür

Liquide de dispersion de particule de polymère ionique et son procédé de production

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.09.2007 JP 2007235971**

(43) Date of publication of application:
**18.03.2009 Bulletin 2009/12**

(73) Proprietor: **FUJIFILM Corporation**
**Tokyo 106-0031 (JP)**

(72) Inventor: **Kiyoto, Naoharu**
**Ashigarakami-gun**
**Kanagawa 258-8577 (JP)**

(74) Representative: **HOFFMANN EITLE**
**Patent- und Rechtsanwälte**
**Arabellastrasse 4**
**81925 München (DE)**

(56) References cited:
**EP-A- 1 110 977**
**WO-A-00/64953**
**WO-A-2007/067140**
**WO-A-2008/055855**
**US-A- 4 942 209**
**US-A1- 2003 130 415**
**US-A1- 2005 075 416**

- **DATABASE WPI Week 200464 Thomson Scientific, London, GB; AN 2004-657839 XP002502927 & JP 2004 256711 A (KANSAI PAINT CO LTD) 16 September 2004 (2004-09-16)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 036 927 B1

## Description

### Field of the Invention

The present invention relates to an ionic polymer particle dispersion liquid and to a method for producing the same. In particular, the invention relates to an ionic polymer particle dispersion liquid to be used for an electrode for polymer electrolyte fuel cell.

### Description of the Related Art

In recent years, in cooperation with social needs and trend against the backdrop of an energy or environmental issue, a fuel cell capable of working even at normal temperature and of yielding a high output density is noticed as a power source for electric automobile or a stationary power source. The fuel cell is a clean power generating system in which a product by the electrode reaction is water in principle and which does not substantially adversely affect the global environment. The fuel cell includes a polymer electrolyte fuel cell (PEFC), a phosphoric acid fuel cell (PAFC), an alkaline fuel cell (AFC), a solid oxide fuel cell (SOFC) and a molten carbonate fuel cell (MCFC). Of these, the polymer electrolyte fuel cell is expected as a power source for electric automobile because it works at a relatively low temperature and yields a high output density.

In general, the polymer electrolyte fuel cell has a structure in which a membrane and electrode assembly (hereinafter also referred to as "MEA") is interposed between separators. For example, MEA is composed such that an electrolyte membrane is interposed between a pair of a catalyst layer and a conductive layer (gas diffusion layer).

The catalyst layer is a porous layer formed of a mixture of an electrolyte and a conductive material on which an active metal catalyst is carried. Also, as a conductive layer, a layer by forming a carbon water-repellent layer comprising a carbon particle, a water repellent and the like on the surface of a gas diffusion substrate such as carbon cloth is used.

In the polymer electrolyte fuel cell, an electrochemical reaction proceeds in the following manner. First of all, hydrogen contained in a fuel gas which is supplied into the catalyst layer on the anode electrode side is oxidized by the active metal catalyst to form a proton and an electron as expressed in the following expression (1). Next, the formed proton goes through a proton conducting material contained in the catalyst layer on the anode electrode side and further through the electrolyte membrane coming into contact with the catalyst layer on the anode electrode side to reach the catalyst layer on the cathode electrode side. Also, the electron formed in the catalyst layer on the anode electrode side goes through a conductive material constituting the catalyst layer on the anode electrode side and further through the conductive layer contacting with the side different from the polymer electrolyte membrane of the catalyst layer on the anode electrode side and passes through a separator and an external circuit to reach the catalyst layer on the cathode electrode side. The proton and the electron, both of which have reached the catalyst layer on the cathode electrode side react with oxygen contained in an oxidizing agent gas which is supplied on the cathode electrode side by the active metal catalyst to form water as expressed in the following expression (2). The fuel cell makes it possible to take out electricity to the outside through the foregoing electrochemical reaction. Catalyst layer on the anode electrode side: $H_2 \rightarrow 2H^+ + 2e^-$ (1) Catalyst layer on the cathode electrode side: $1/2O_2 + 2H^+ + 2e^- \rightarrow H_2O$ (2)

For that reason, the electrolyte membrane is required to have high proton conductivity, a function as a separator interposed between the electrodes and the like.

The manufacturing process of a polymer electrolyte fuel cell is described in, for example, JP-A-5-135785, and in general, the electrolyte membrane and the two electrodes are assembled by means of hot pressing for pressurizing the electrolyte membrane while heating. For example, an electrolyte membrane is interposed between two electrodes; they are further inserted between two press plates; the temperature is then raised from 125 to 130[deg.]C; hot pressing is carried out at a pressure of about 10 MPa for about 60 seconds, thereby agglutinating the electrolyte membrane and the two electrodes.

JP-A-2003-55568, JP-A-2004-35864 and JP-A-2004-75979 each describes an ion exchanger polymer dispersion liquid. However, they involve a problem of expensiveness since a fluorocarbon based material is used.

JP-A-2004-256711 describes an ionic liquid-containing polymer dispersion. However, this dispersion liquid is in a liquid state. Then, a polymer dispersion liquid utilizable for a polymer electrolyte fuel cell is demanded.

WO 2007/067140 teaches a process for preparing polymer beads having a narrow pore sized distribution. The process comprises providing polymers and optionally porgens and additives in the presence of non-porous particles. The mixture is then dispersed in a dispersing medium to form monomer droplets comprising the non-porous particles. The monomer droplets are then polymerized and finally the non-porous particles are removed from the formed polymer beads.

SUMMARY OF THE INVENTION

A problem of the invention is to overcome such inconveniences and to provide an ionic polymer particle dispersion liquid utilizable for a material of a catalyst layer and a method for producing the same.

Under such circumstances, the present inventor made further investigations on the following points.

A perfluoroalkylene sulfonic acid polymer (for example, NAFION (a registered trademark), manufactured by DuPont) which as hitherto been widely used as an electrolyte membrane in a membrane and electrode assembly has excellent proton conductivity because of being made by sulfonation and chemical resistance as a fluorocarbon resin, but it is expensive. Therefore, the present inventor also made investigations for the purpose of avoiding such a problem.

Then, the present inventor made investigations for the purpose of forming a membrane and electrode assembly using, for example, a sulfonated product of a hydrocarbon based polymer compound which does not contain fluorine in a molecular structure thereof or which is reduced in an amount of fluorine in a molecular structure thereof, as an inexpensive electrolyte membrane in place of the perfluoroalkylene sulfonic acid polymer. This point has hitherto been studied, as a hydrocarbon based polymer, a polymer with a main chain in which plural benzene rings such as polyether ether ketone and benzimidazole are bonded via a divalent organic group or directly is known. Also, as a hydrocarbon based polymer, U. S. Patent No. 5, 403, 675 describes a rigid polyphenylene compound.

However, the present inventor has found out that when an electrolyte membrane, especially an electrolyte membrane composed of a hydrocarbon based polymer, is interposed between catalyst layers and integrated, sufficient adhesion between the electrolyte membrane and the catalyst layers becomes poor. Also, in a membrane and electrode assembly with low adhesion between an electrolyte membrane and a catalyst layer, since the transfer of a proton between the electrolyte membrane and the catalyst layer is hindered, a sufficient power generating performance is not obtainable.

As a result of investigations made by the present inventor, it was found that the reason why the adhesion is low resides in that even when the foregoing hydrocarbon based polymer is used as a material of the electrolyte membrane, the perfluoroalkylene sulfonic acid polymer is used in the catalyst layer. This is because the foregoing hydrocarbon based polymer cannot be dispersed in a solvent as the perfluoroalkylene sulfonic acid polymer so that it cannot be incorporated into the catalyst layer.

STATEMENT OF INVENTION

According to a first aspect, the present invention provides a liquid dispersion comprising ionic polymer particles having a volume average particle size of from 1 nm to 200 nm, the dispersion being obtainable by continuously mixing water in which an ionic polymer has a solubility of not more than 10 mg/ml and an ionic polymer solution comprising the ionic polymer dissolved in an organic solvent miscible with water and in which the solubility of the ionic polymer is 20 mg/ml or more, to form ionic polymer particles, the ionic polymer being a hydrocarbon based polymer having an aromatic ring in its main chain and a sulfoalkyl group of formula $-(CH_2)_n-SO_3H$ wherein n is an integer of 1 to 6 in a side chain thereof.

Preferably the addition flow rate of the water to the addition flow rate of the ionic polymer solution is 3 or more in terms of a volume flow rate ratio.

According to a second aspect, the present invention provides an electrode for a fuel cell using the liquid dispersion defined in the above first aspect.

According to a third aspect, the present invention provides a membrane and an electrode assembly comprising a pair of electrodes and electrolyte membrane provided between the electrodes, the electrodes being the electrode for a fuel cell as defined in the above second aspect.

According to a fourth aspect, the present invention provides a fuel cell using the membrane and electrode assembly of the above third aspect.

According to a fifth aspect, the present invention provides a method for producing a liquid dispersion comprising ionic polymer particles having a volume average particle size of from 1 nm to 200 nm, comprising the step of continuously mixing water in which an ionic polymer has a solubility of not more than 10 mg/ml and an ionic polymer solution comprising the ionic polymer dissolved in an organic solvent miscible with water and in which the solubility of the ionic polymer is 20 mg/ml or more, to form ionic polymer particles,

the ionic polymer being a hydrocarbon based polymer having an aromatic ring in its main chain and a sulfoalkyl group of formula $-(CH_2)_n-SO_3H$ wherein n is an integer of 1 to 6 in a side chain thereof.

Preferably the method further comprises dispersing the ionic polymer particles for stabilization.

Preferably the method further comprises concentrating the liquid dispersion.

By employing an electrode using the ionic polymer particle dispersion liquid of the invention, it is possible to prepare a fuel cell having an excellent maximum output.

BRIEF DESCRIPTION OF THE DRAWINGS

Fig. 1 is a diagrammatic cross-sectional view showing one example of a configuration of a membrane and electrode assembly.
Fig. 2 is a diagrammatic cross-sectional view showing one example of a structure of a fuel cell.
Fig. 3 shows one example of a preparation method of an ionic polymer fine particle dispersion.

DETAILED DESCRIPTION OF THE PREFERRED EMBODIMENTS

The contents of the invention are hereunder described in detail. In this specification, numerical value ranges expressed by the term "to" mean that the numerical values described before and after it are included as a lower limit and an upper limit, respectively.

<<Ionic polymer particle dispersion>>

First of all, one example of a preparation method of an ionic polymer particle dispersion liquid of the invention is described with reference to a drawing (Fig. 3).
The explanation of constitutional elements as described below is one example (representative example) of embodiments of the invention, but it should not be construed that the invention is limited to these contents.
The preparation method of the ionic polymer particle dispersion liquid of the invention is a production method utilizing a so-called poor solvent precipitation method of a continuous system in which a poor solvent in which an ionic polymer is poorly soluble and an ionic polymer solution comprising the ionic polymer dissolved in a good solvent having miscibility with the poor solvent and having readily-solubility to the ionic polymer, are continuously mixed to form an ionic polymer particle. The terms "continuously mixed" as referred to herein refer to a state in which the poor solvent and the ionic polymer solution are mixed in a state wherein the both are fluidized and new mixing continuously occurs with a lapse of time.
In the invention, the ionic polymer particle is prepared in a mixing and precipitation step of continuously mixing a poor solvent and an ionic polymer solution to form an ionic polymer particle dispersion liquid. One preferred embodiment of the invention is hereunder specifically described with reference to the drawing.
That is, as illustrated in Fig. 3, in general, a mixing and precipitation step (A) of continuously mixing a poor solvent and an ionic polymer solution to form an ionic polymer particle dispersion liquid is included. Furthermore, it is preferable that a dispersion and stabilization step (B) of dispersing for stabilization an ionic polymer particle in the ionic polymer particle dispersion liquid or a concentration step (C) of concentrating the ionic polymer particle dispersion is included. The configuration of an instrument to be used in the invention is described along with the contents of the foregoing respective steps.
While illustration is omitted, in the foregoing mixing and precipitation step (A), in general, an ionic polymer solution comprising an ionic polymer is supplied from an ionic polymer solution tank, and a poor solvent is supplied from a poor solvent tank. In that case, these ionic polymer solution and poor solvent are each supplied after adjusting the temperature to a prescribed temperature with a liquid feed pump and a heat exchanger. Though the temperature suitable for the precipitation of the ionic polymer particle varies depending upon the objective ionic polymer, it is usually from 0 to 90°C, and preferably from 0 to 50°C. More specifically, the temperature of the ionic polymer solution is from 10 to 50°C, and the temperature of the poor solvent is from 0 to 40°C.
In supplying the ionic polymer solution and the poor solvent into the mixing and precipitation step (A), the temperature control of the ionic polymer solution and the poor solvent may be carried out by providing each of the ionic polymer solution tank and the poor solvent tank with a temperature control measure in place of the foregoing heat exchanger.
In the invention, the ionic polymer is mainly objective to one which is poorly soluble in water. That is, in that case, the poor solvent against the ionic polymer is water, and the good solvent against the ionic polymer is an organic solvent. However, in the invention, a water-soluble ionic polymer can not be applied, and a combination of the ionic polymer and a solvent is of importance. For example, in the case where an aromatic hydrocarbon based polymer is used as the ionic polymer, the good solvent is preferably dimethylacetamide, and the poor solvent is preferably water.
The ionic polymer which is poorly soluble in water as referred to in the invention refers to one which has a solubility in water of not more than 10 mg/mL, especially in water at 20°C. In the present invention, the solubility in water at 20°C of the ionic polymer which is poorly soluble in water is preferably not more than 5 mg/mL, and more preferably not more than 1 mg/mL. It is preferable that the solubility is lower because using water as the poor solvent, forms finer particles.

As to the ionic polymer to be used in the invention, this is a sulfoalkylated aromatic hydrocarbon based polymer having an aromatic ring in a main chain thereof and having a sulfoalkyl group represented by the following formula (1) into a side chain thereof. Specific examples thereof include engineering plastics such as polyetheretherketone (PEEK) having a structural unit represented by the following formula (2) which is developed by ICI, UK in 1977; semi-crystalline polyaryletherketone (PAEK) which is developed by BASF, Germany; polyetherketone (PEK) having a structural unit represented by the following formula (3) which is sold by Sumitomo Chemical Co. , Ltd. , etc. ; polyketone (PK) which is sold by Teijin Amoco Engineering Plastic Ltd.; polyethersulfone (PES) having a structural unit represented by the following formula (4) which is sold by Sumitomo Chemical Co., Ltd., Teijin Amoco Engineering Plastics Ltd., Mitsui Chemicals Inc., etc.; polysulfone (PSU) having a structural unit represented by the following formula (5) which is sold by Solvay Advanced Polymers K.K.; linear or crosslinked polyphenylene sulfide (PPS) having a structural unit represented by the following formula (6) which is sold by Toray Industries, Inc. , Dai Nippon Chemical Industries Inc. , Toopren K.K., Idemitsu petrochemical Co., Ltd., Kureha Corporation, etc.; and denatured polyphenylene ether (PPE) having a structural unit represented by the following formula (7) which is sold by Asahi Kasei Corporation, GE Plastics Japan Ltd., Mitsubishi Engineering-Plastics Corporation and Sumitomo Chemical Co., Ltd.; or aromatic hydrocarbon based polymers having a sulfoalkyl group represented by the following formula (1) introduced into a side chain of a polymer alloy thereof. Of these, from the viewpoint of resistance to oxidative deterioration of the main chain, sulfoalkylated PEEK, PEAK, PEK, PK, PPS, PES and PSU are preferable.

Formula (1)

$$-(CH_2)_n-SO_3H$$

In the formula (1), n is 1, 2, 3, 4, 5 or 6.

Formula (2)

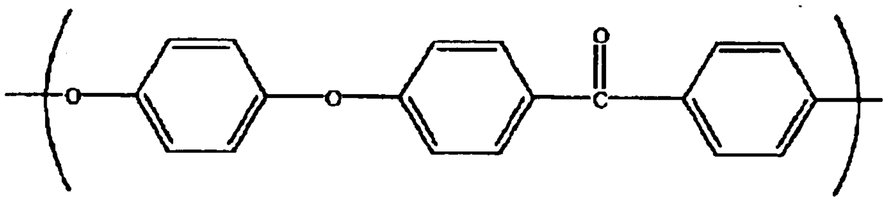

Formula (3)

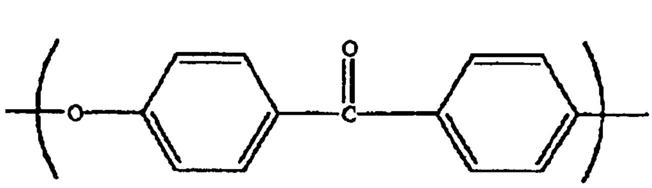

Formula (4)

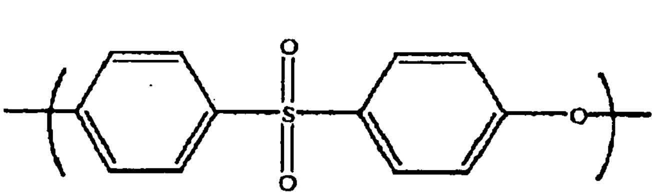

Formula (5)

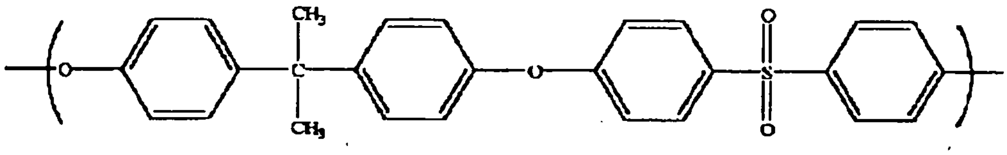

Formula (6)

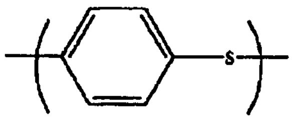

Formula (7)

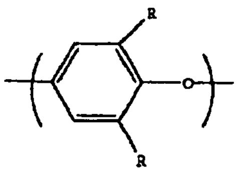

In the formula (7), R represents a lower alkyl group such as a methyl group and an ethyl group; or a phenyl group.

A sulfonic acid type polystyrene-graft-ethylene tetrafluoroethylene copolymer (ETFE) constituted of a main chain prepared by copolymerization of a fluorocarbon based vinyl monomer and a hydrocarbon based vinyl monomer and a sulfonic group-containing hydrocarbon based side chain as disclosed in JP-A-9-102322; a sulfonic acid type polystyrene-graft-ETFE as disclosed in JP-A-9-102322; a sulfonic acid type poly(trifluorostyrene)-graft-ETFE formed into an electrolyte membrane by graft polymerizing α,β,β-trifluorostyrene on a membrane prepared by copolymerization of a fluorocarbon based vinyl monomer and a hydrocarbon based vinyl monomer to introduce a sulfonic group as disclosed in U.S. Patent No. 4,012,303 and U.S. Patent No. 4,605,685; and the like can also be used.

An ion exchange group equivalent weight of the ionic polymer to be used in the invention is preferably from 250 to 2,500 g/mole, more preferably from 300 to 1,500 g/mole, and further preferably from 350 to 1,000 g/mole. When the ion exchange group equivalent weight is not more than 2, 500 g/mole, the output performance tends to be enhanced, whereas when it is 250 g/mole or more, the waterproof properties of the polymer tend to be enhanced, and therefore, such range is preferable.

Here, the poor solvent in which the ionic polymer in the invention is poorly soluble refers to one having, for example, a solubility of ionic polymer of not more than 10 mg/mL.

The poor solvent may be used singly or in admixture of two or more kinds thereof. The poor solvent to be used in the invention is water.

The good solvent is not particularly limited so far as it is a solvent capable of dissolving the ionic polymer therein and miscible with the poor solvent. A mixed solvent of two or more kinds of good solvents may be used.

As the good solvent to be used in the invention, an organic solvent which can be easily removed from the ionic polymer particle dispersion liquid is preferable. Examples of such solvents include methanol, ethanol, isopropyl alcohol, 1-butanol, n-methylpyrrolidone, acetone, tetrahydrofuran, dimethylformamide, ethylenediamine, acetonitrile, methyl ethyl ketone, dimethyl sulfoxide, dichloromethane and dimethylacetamide.

In the invention, as the good solvent which is miscible with the poor solvent and is readily-solubility to the ionic polymer, a solvent which is co-soluble with the poor solvent, namely a solvent which in mixing with the poor solvent, is not separated into liquid-liquid two phases at a mixing temperature and in a mixing proportion, is preferable. A solubility of the ionic polymer in the good solvent may be 10 mg/mL or more and is preferably 20 mg/mL or more. Though its upper limit is not particularly limited, it is about 200 mg/mL. A concentration of the ionic polymer in the ionic polymer solution may be a concentration not exceeding a saturated solubility at room temperature and is preferably from 50 to 100 % by mass, and more preferably from 70 to 90 % by mass of the solubility.

Here, in continuously mixing with the poor solvent, a flow rate of the good solvent in which the ionic polymer is dissolved is preferably from 0.1 to 20,000 mL/min, and more preferably from 0.2 to 10,000 mL/min.

On the other hand, in continuously mixing with the good solvent, a flow rate of the poor solvent is preferably from 1 to 50, 000 mL/min, and more preferably from 2 to 50, 000 mL/min.

For example, in order to contain an ionic polymer particle of a sub-micron order of from 1 to 200 nm, in mixing the poor solvent and the ionic polymer solution, a volume flow rate ratio of the poor solvent to the good solvent is preferably set up at from 1/1 to 100/1, preferably set up at from 5/1 to 100/l, and further preferably set up at from 10/1 to 100/1. Furthermore, in order to obtain an ionic polymer particle dispersion liquid having a smaller particle size and having excellent dispersion stability by mixing the poor solvent and the ionic polymer solution, it is preferable to contain a dispersion stabilizer in the poor solvent or the ionic polymer solution.

In the mixing and precipitation step (A), an ionic polymer particle dispersion liquid is formed by mixing the poor solvent and the ionic polymer solution. In the mixing and precipitation step (A), in order to obtain an ionic polymer particle dispersion liquid comprising a smaller particle size and having excellent dispersion stability, one or two or more kinds of dispersion stabilizers may be added in the ionic polymer solution or the poor solvent or both the ionic polymer solution and the poor solvent.

The selection of the dispersion stabilizer varies depending upon the kinds of the ionic polymer and the good solvent. In general, the dispersion stabilizer is selected among nonionic, anionic or cationic surfactants, polymers, phospholipids and the like. Examples of the stabilizer which is especially preferable include a polyoxyethylene sorbitan fatty acid ester (a trade name: TWEEN), a sucrose fatty acid ester, a sorbitan fatty acid ester (a trade name: SPAN), a polyoxyethylene fatty acid ether, an aero sol (AOT), sodium lauryl sulfate, sodium deoxycholate, polyvinylpyrrolidone, polyvinyl alcohol, polyoxyethylene polyoxypropylene glycol (a trade name: PLURONIC), polyethylene glycol, polyoxyethylene castor oil, hydroxypropyl cellulose, dextran, gelatin, casein and lecithin.

A concentration of the stabilizer is preferably set up such that a weight ratio thereof to the ionic polymer in the ionic polymer particle dispersion liquid to be formed is in the range of from 0.01 to 10.

As described previously, in general, as to the volume flow rate ratio between the poor solvent and the ionic polymer solution in the mixing and precipitation step (A), the poor solvent is overwhelmingly large. Therefore, when the temperature of the poor solvent is controlled by the foregoing heat exchanger or temperature control measure of the tank, the temperature of the obtained ionic polymer particle dispersion liquid becomes substantially equal to the temperature of the poor solvent. Accordingly, the temperature of the poor solvent may be a temperature suitable for the precipitation of the ionic polymer particle. On the other hand, the temperature of the ionic polymer solution may be set up at the same temperature as that of the poor solvent or may be set up at a temperature at which there is no anxiety for the precipitation of a particle within a conduit prior to the introduction into the mixing and precipitation step (A).

The ionic polymer particle dispersion liquid obtained in the foregoing mixing and precipitation step (A), namely a suspension in which the precipitated ionic polymer is dispersed in the solvent may be further dispersed and stabilized by immediately supplying it into a dispersion and stabilization step (B), if desired. In the dispersion and stabilization step (B), the particle size can be made smaller by applying a wet pulverization method which does not use a pulverization medium (for example, a steel ball for impact pulverization) and pulverizing and dispersing the ionic polymer particle in the ionic polymer particle dispersion liquid. Examples of the wet pulverization method which does not use a pulverization medium include a method in which coagulated particles are broken and pulverized by means of kinetic energy of fluid and impact energy due to cavitation by using an ultrasonic homogenizer, a high-pressure homogenizer (for example, homogenizers known as MICROFLUIDIZER (a trade name, manufactured by MFI Corporation, U.S.A.), ULTIMIZER (a trade name, manufactured by Sugino Machine Limited) and NANO-MIZER (a trade name, manufactured by Yoshida Kikai Co., Ltd.), respectively), a piston-gap homogenizer (for example, a homogenizer, manufactured by APV Gaulin), etc.

If desired, the thus obtained ionic polymer particle dispersion liquid can be subjected to concentration or removal of the good solvent by immediately supplying into a concentration step (C). In adjusting the concentration of a solid, the poor solvent and the good solvent can be partially removed by utilizing a method known in the technical field such as distillation and membrane separation. In particular, in the case where the concentration of a solid is adjusted by an operation such as distillation, because there is a possibility that the particles in the suspension are coagulated, dispersion and stabilization may be again carried out.

According to a preferred embodiment of the method for producing an ionic polymer particle of the invention, the ionic polymer solution can be rapidly and uniformly dispersed. As a result, an ionic polymer particle dispersion liquid having a volume average particle size of, for example, from 1 nm to 1 $\mu$m, and preferably from 1 to 200 nm can be obtained.

The volume average particle size can be simply measured by a dynamic light scattering particle size distribution analyzer.

The ionic polymer particle distribution of the invention can be used by, for example, adding in a catalyst layer of a membrane and electrode assembly which a fuel cell possesses. Preferred examples of an electrode for fuel cell, a membrane and electrode assembly and a fuel cell using the ionic polymer particle dispersion liquid of the invention are hereunder described.

<<Electrolyte membrane>>

Membranes prepared by fabricating a known electrolyte in a membrane form and known electrolyte membranes can be widely employed as the electrolyte membrane to be used in the invention.

Above all, fluorocarbon polymers are excellent in chemical stability so that they can be preferably used. Specific examples thereof include perfluorosulfonic acid membranes having high proton conductivity, which are known as trade names including NAFION (a registered trademark, manufactured by DuPont), ACIPLEX (a registered trademark, manufactured by Asahi Kasei Corporation) and FLEMION (a registered trademark, manufactured by Asahi Glass Co. , Ltd.).

In the invention, for example, a sulfoalkylated aromatic hydrocarbon based polymer having an aromatic ring in a main chain thereof can be used as the electrolyte. In particular, it is preferable that a sulfoalkylated aromatic hydrocarbon based polymer having a sulfoalkyl group represented by the following formula (1) introduced into a side chain thereof is used as the electrolyte.

Specific examples of the sulfoalkylated aromatic hydrocarbon based polymer include engineering plastics such as polyetheretherketone (PEEK) having a structural unit represented by the following formula (2) which is developed by ICI, UK in 1977; semi-crystalline polyaryletherketone (PAEK) which is developed by BASF, Germany; polyetherketone (PEK) having a structural unit represented by the following formula (3) which is sold by Sumitomo Chemical Co., Ltd., etc.; polyketone (PK) which is sold by Teijin Amoco Engineering Plastic Ltd.; polyethersulfone (PES) having a structural unit represented by the following formula (4) which is sold by Sumitomo Chemical Co., Ltd., Teij in Amoco Engineering Plastics Ltd., Mitsui Chemicals Inc., etc.; polysulfone (PSU) having a structural unit represented by the following formula (5) which is sold by Solvay Advanced Polymers K.K.; linear or crosslinked polyphenylene sulfide (PPS) having a structural unit represented by the following formula (6) which is sold by Toray Industries, Inc. , Dai Nippon Chemical Industries Inc. , Toopren K.K., Idemitsu petrochemical Co., Ltd., Kureha Corporation, etc.; and denatured polyphenylene ether (PPE) having a structural unit represented by the following formula (7) which is sold by Asahi Kasei Corporation, GE Plastics Japan Ltd., Mitsubishi Engineering-Plastics Corporation and Sumitomo Chemical Co., Ltd.; or aromatic hydrocarbon based polymers having a sulfoalkyl group represented by the following formula (1) introduced into a side chain of a polymer alloy thereof.

Of these, from the viewpoint of resistance to oxidative deterioration of the main chain, PEEK, PEAK, PEK, PK, PPS, PES and PSU are preferable.

Formula (1)

$$-(CH_2)_n-SO_3H$$

In the formula (1), n is 1, 2, 3, 4, 5 or 6.

Formula (2)

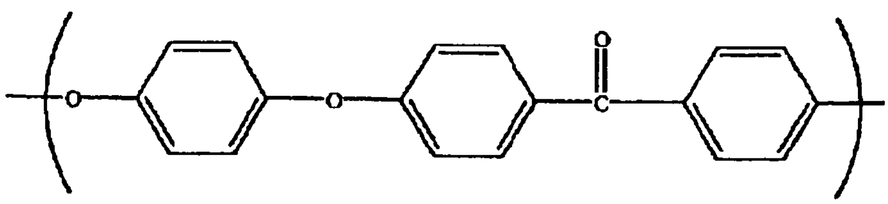

Formula (3)

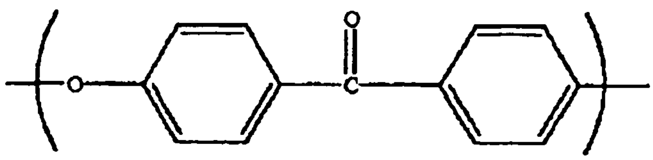

Formula (4)

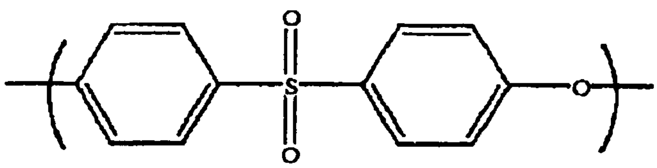

Formula (5)

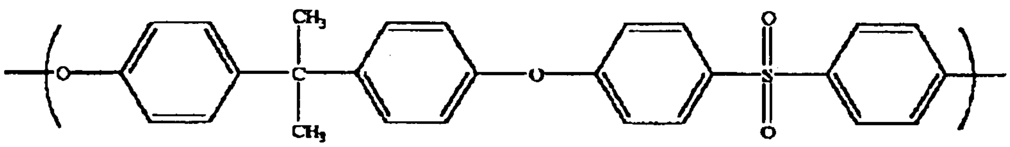

Formula (6)

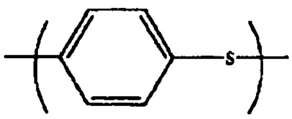

Formula (7)

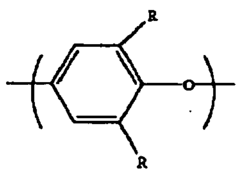

In the formula (7), R represents a lower alkyl group such as a methyl group and an ethyl group; or a phenyl group.

A sulfonic acid type polystyrene-graft-ethylene tetrafluoroethylene copolymer (ETFE) constituted of a main chain prepared by copolymerization of a fluorocarbon based vinyl monomer and a hydrocarbon based vinyl monomer and a sulfonic group-containing hydrocarbon based side chain as disclosed in JP-A-9-102322; a sulfonic acid type polystyrene-graft-ETFE as disclosed in JP-A-9-102322; a sulfonic acid type poly(trifluorostyrene)-graft-ETFE formed into an electrolyte membrane by graft polymerizing α,β,β-trifluorostyrene on a membrane prepared by copolymerization of a fluorocarbon based vinyl monomer and a hydrocarbon based vinyl monomer to introduce a sulfonic group as disclosed in U.S. Patent No. 4,012,303 and U.S. Patent No. 4,605,685; and the like can also be used as an electrolyte membrane in the present invention.

An ion exchange group equivalent weight of the ionic polymer to be used in the invention is preferably from 250 to 2,500 g/mole, more preferably from 300 to 1,500 g/mole, and further preferably from 350 to 1,000 g/mole. When the ion exchange group equivalent weight is not more than 2, 500 g/mole, the output performance tends to be enhanced, whereas when it is 250 g/mole or more, the waterproof properties of the electrolyte tend to be enhanced, and therefore, such range is preferable.

The ion exchange group equivalent weight as referred to in the invention represents a molecular weight of a polymer as the electrolyte per unit mole of a functional group having ion exchange properties, and it is meant that the smaller the value is, the higher the content of the functional group having ion exchange properties is. The ion exchange group equivalent weight can be measured by $^1$H-NMR spectroscopy, elemental analysis, acid-base titration described in JP-B-1-52866, non-aqueous acid-base titration (a normal solution is a benzene/methanol solution of potassium methoxide), etc.

Though the fabrication method of the electrolyte membrane is not particularly limited, a method of achieving fabrication from a solution state (a solution casting method) , a method of achieving fabrication from a molten state (a melt pressing method or a melt extrusion method) and the like can be employed. Specifically, as to the former, the fabrication can be achieved by, for example, cast coating a solution containing an ion exchange polymer as the electrolyte on a glass plate and removing a solvent. The solvent to be used for the fabrication is not particularly limited so far as it is able to dissolve an ion exchange polymer as the electrolyte therein and be then removed. Examples of the solvent which can be favorably used include aprotic polar solvents such as N,N'-dimethylformamide, N,N'-dimethylacetamide, N-methyl-2-pyrrolidone and dimethyl sulfoxide; alkylene glycol monoalkyl ethers such as ethylene glycol monomethyl ether, ethylene glycol monoethyl ether, propylene glycol monomethyl ether and propylene glycol monoethyl ether; halogen based solvents such as dichloromethane and trichloroethane; and alcohols such as isopropyl alcohol and tert-butyl alcohol.

Though a thickness of the electrolyte membrane to be used in the invention is not particularly limited, it is preferably from 10 to 300 μm, more preferably from 10 to 200 μm, and further preferably from 30 to 100 μm. When the thickness of the electrolyte membrane is 10 μm or more, the electrolyte membrane has a strength more suitable for practical use; and when it is not more than 300 μm, a reduction in the membrane resistance, namely an enhancement in the power generating performance tends to be enhanced, and therefore, such range is preferable. In the case of the solution casting method, the thickness of the electrolyte membrane can be controlled by regulating the concentration of the solution of the ion exchange polymer as the electrolyte or regulating the thickness for coating on a substrate. In the case of the fabrication from a molten state, the thickness of the electrolyte membrane can be controlled by stretching a film having a prescribed thickness as obtained by a melt pressing method, a melt extrusion method or the like in a prescribed stretch ratio.

<<Other components of electrolyte membrane>>

In producing the electrolyte membrane to be used in the invention, additives which are used for usual polymers, such as a plasticizer, a stabilizer and a release agent can be used within the range where the object of the invention is not hindered.

To the solid electrolyte of the invention, according to need, an oxidation inhibitor, a fiber, a fine particle, a water-absorbing agent, a plasticizer, a compatibilizing agent or the like may be added in order to enhance film properties. The content of these additives is preferably in a range of 1 to 30% by mass relative to the total amount of the solid electrolyte.

Preferable examples of the oxidation inhibitor include (hindered) phenol-based, mono- or di-valent sulfur-based, tri-or penta-phosphorous-based, benzophenone-based, benzotriazole-based, hindered amine-based, cyanoacrylate-based, salicylate-based, and oxalic acid anilide-based compounds. Specifically, compounds described in JP-A-8-53614, JP-A-10-101873, JP-A-11-114430 and JP-A-2003-151346 can be mentioned.

Preferable examples of the fiber include perfluorocabon fiber, cellulose fiber, glass fiber, polyethylene fiber and the like. Specifically, fibers described in JP-A-10-312815, JP-A-2000-231928, JP-A-2001-307545, JP-A-2003-317748, JP-A-2004-63430 and JP-A-2004-107461 can be mentioned.

Preferable examples of the fine particle include fine particles composed of silica, alumina, titanium oxide, zirconium oxide and the like. Specifically, those described in JP-A-6-111834, JP-A-2003-178777, and JP-A-2004-217921 can be mentioned.

Preferable examples of the water-absorbing agent (hydrophilic material) include cross-linked polyacrylates, starch-acrylates, poval, polyacrylonitrile, carboxymethyl cellulose, polyvinylpyrrolidone, polyglycol dialkylether, polyglycol dialkylester, silica gel, synthesized zeolite, alumina gel, titania gel, zirconia gel, and yttria gel. Specifically, water-absorbing agents described in JP-A-7-135003, JP-A-8-20716 and JP-A-9-251857 can be mentioned.

Preferable examples of the plasticizer include phosphoric acid ester-based compounds, phthalic acid ester-based compounds, aliphatic monobasic acid ester-based compounds, aliphatic dibasic acid ester-based compounds, dihydric alcohol ester-based compounds, oxyacid ester-based compounds, chlorinated paraffins, alkylnaphthalene-based compounds, sulfone alkylamide-based compounds, oligo ethers, cabonates, and aromatic nitriles. Specifically, those described in JP-A-2003-197030, JP-A-2003-288916, and JP-A-2003-317539 can be mentioned.

Further, the solid electrolyte of the invention may be incorporated with various polymer compounds for the purpose of (1) enhancing mechanical strength of the film, or (2) enhancing acid concentration in the film.

(1) For the purpose of enhancing mechanical strength, such polymer compound is suitable that has molecular weight of around 10,000 to 1,000,000 and good compatibility with the solid electrolyte of the invention. For example, perfluorinated polymer, polystyrene, polyethylene glycol, polyoxetane, poly(meth)acrylate, polyether ketone, polyether sulfone, and polymers of 2 or more of these are preferable, and preferable content is in a range of 1 to 30% by mass relative to the whole.

A compatibilizing agent has a boiling point or sublimation point of preferably 250°C or more, and more preferably 300°C or more.

(2) For the purpose of increasing acid concentration, such polymer compound is preferable that has a proton acid site such as perfluorocarbon sulfonic acid polymers as represented by NAFION (a registered trademark), poly(meth) acrylates having a phosphoric acid group in a side chain, or sulfonated heat resistant aromatic polymers such as sulfonated polyether ether ketone, sulfonated polyether sulfone, sulfonated polysulfone or sulfonated polybenzimidazole, which is preferably contained in a range of 1-30% by mass relative to the whole.

As to properties of the electrolyte membrane to be used in the invention, those having the following various performances are preferable.

An ionic conductivity is preferably 0.005 S/cm or more, and more preferably 0.01 S/cm or more at 25°C and 95 % RH.

As to the strength, for example, a tensile strength is preferably 10 MPa or more, and more preferably 20 MPa or more.

As to the electrolyte membrane to be used in the invention, one having stable water absorption and water content is preferable. It is preferable that the solubility of the electrolyte membrane to be used in invention is of a substantially negligible degree against alcohols, water and a mixed solvent thereof. It is preferable that when the electrolyte membrane to be used in the invention is dipped in the foregoing solvent, a loss in weight and a change in form are of a substantially negligible degree.

In the case of forming a membrane, as to the ion conducting direction, it is preferable that a direction from the front surface toward the rear surface is higher than other directions. However, the ion conducting direction may be random.

A heat resistant temperature of the electrolyte membrane to be used in the invention is preferably 200°C or higher, more preferably 250°C or higher, and further preferably 300°C or higher. For example, the heat resistant temperature can be defined as a time when it reaches a loss in weight of 5 % upon heating at a rate of 1°C/min. This loss in weight is calculated by eliminating a volatile matter such as water.

Further, when the solid electrolyte of the invention is used for a fuel cell, an active metal catalyst that facilitates the oxidation-reduction reaction of an anode fuel and a cathode fuel may be added. As the result, fuels permeating into the solid electrolyte tend to be consumed in the solid electrolyte without reaching the other electrode, whereby crossover can be prevented. As active metal type to be used, an active metal catalyst as described after is suitable and, platinum or an alloy based on platinum is preferable.

<<Configuration of fuel cell>>

Next, the membrane and electrode assembly of the invention and the fuel cell using the membrane and electrode assembly are described.

Fig. 1 shows one example of a cross-sectional diagrammatic view of the membrane and electrode assembly of the invention. MEA 10 is provided with an electrolyte membrane 11 and an anode electrode 12 and a cathode electrode 13 interposing the electrolyte membrane 11 therebetween and opposing to each other.

The anode electrode 12 and the cathode electrode 13 are composed of, for example, conductive layers 12a and 13a and catalyst layers 12b and 13b, respectively. The catalyst layers 12b and 13b each contains an active metal catalyst-carried conductive material and an ionic polymer particle dispersion liquid. For the purpose of bringing the catalyst layers 12b and 13b into intimate contact with the electrolyte membrane 11, a method in which the catalyst layers 12b and 13b are coated on the conductive layer sheets 12a and 13a, respectively, followed by contact bonding on the electrolyte membrane 11 by a hot pressing method (preferably at from 120 to 250°C and from 2 to 100 $kg/cm^2$), or a method in which the catalyst layers 12b and 13b are coated on an appropriate support and subjected to contact bonding while transferring onto the electrolyte membrane 11, followed by interposing between the conductive layers 12a and 13a is generally employed.

Fig. 2 shows one example of a structure of the fuel cell. The fuel cell has an MEA 10, a pair of collectors 17

composed of a separator and gaskets 14. The collector 17 on the anode electrode side is provided with a supply and exhaust opening 15 on the anode electrode side; and the collector 17 on the cathode electrode side is provided with a supply and an exhaust opening 16 on the cathode electrode side. A gas fuel such as hydrogen and an alcohol (for example, methanol) or a liquid fuel such as an alcohol aqueous solution is supplied from the supply and exhaust opening 15 on the anode electrode side; and an oxidizing agent gas such as an oxygen gas and air is supplied from the supply and exhaust opening 16 from the cathode electrode side.

The catalyst layer to be used in the membrane and electrode assembly 10 uses the ion exchangeable polymer particle dispersion liquid of the invention and is constituted of an active metal catalyst catalyst-carried conductive material, and if desired, it may contain a water repellent and a binder. A layer (conductive layer) composed of a catalyst-non-carried conductive material and optionally, a water repellent and a binder may be formed outside the catalyst layer. In the catalyst layer, a catalyst having an active metal catalyst carried on a conductive material is used. As the active metal catalyst, any metal capable of promoting an oxidation reaction of hydrogen and a reduction reaction of oxygen is useful, and examples thereof include platinum, gold, silver, palladium, iridium, rhodium, ruthenium, iron, cobalt, nickel, chromium, tungsten, manganese, vanadium and alloys thereof. Of these catalysts, in particular, platinum is used in many cases.

A particle size of the active metal catalyst to be used is usually in the range of from 2 to 10 nm. When the particle size is small, the surface area per unit mass is large, and the activity increases. Thus, such is advantageous. However, when the particle size of the active metal catalyst to be used is too small, there is a tendency that it is difficult to disperse the particle without causing coagulation. Therefore, the particle size of the active metal catalyst to be used is preferably 2 nm or more.

Activated polarization in a hydrogen-oxygen system fuel cell is greater for a cathode pole side (air pole side) compared with anode pole side (hydrogen pole side). This is because reaction at the cathode pole side (reduction of oxygen) is slower compared with that at the anode pole side. In order to enhance activity of the cathode pole side, various platinum-based bimetallic catalysts such as Pt-Cr, Pt-Ni, Pt-Co, Pt-Cu, Pt-Fe can be used. In a fuel cell which employs a reformed gas from fossil fuels containing carbon monoxide as anode fuel, suppression of catalyst poisoning by CO is important. For this purpose, platinum-based bimetals such as Pt-Ru, Pt-Fe, Pt-Ni, Pt-Co and Pt-Mo, and trimetallic catalyst such as Pt-Ru-Mo, Pt-Ru-W, Pt-Ru-Co, Pt-Ru-Fe, Pt-Ru-Ni, Pt-Ru-Cu, Pt-Ru-Sn and Pt-Ru-Au can be used.

As the conductive material on which the active metal catalyst is carried, any electron conductive substance is useful, and examples thereof include various metals and carbon materials. Examples of the carbon material include carbon blacks such as furnace black, channel black and acetylene black; active carbon; and graphite. These materials can be used singly or in admixture. In particular, acetylene black, Vulcan XC-72, ketjen black, carbon nanohorn (CNH) and carbon nanotube are preferably used.

The functions of the catalyst layer are: (1) to transport the fuel to the active metal, (2) to provide a field for oxidation reaction (anode pole) and reduction reaction (cathode pole) of the fuel, (3) to transmit electrons generated by oxidation-reduction to the current collector, and (4) to transport protons generated by the reaction to the solid electrolyte. In order to accomplish (1), the catalyst layer must be porous to allow the liquid and gas fuels to permeate deeply. (2) is borne by the aforementioned active metal catalyst, and (3) is borne by the also aforementioned carbon material. In order to fulfill the function of (4), the catalyst layer is mixed with a proton conductive material.

Here, the ionic polymer particle of the invention works as a proton conducting material of the catalyst layer. In that case, the ionic polymer particle is preferably a polymer containing at least one structural unit the same as in the electrolyte membrane, more preferably a polymer constituted of the same structural unit as in the polymer electrolyte membrane, and most preferably a polymer the same as in the polymer electrolyte membrane.

It is preferable that the catalyst layer further contains a water repellent. As the water repellent, for example, fluorinated carbons and water-repellent fluorine-containing resins are preferable; and those having excellent heat resistance and oxidation resistance are especially preferable. Examples of the water repellent which can be used include polytetrafluoroethylene, a tetrafluoroethylene-perfluoroalkyl vinyl ether copolymer and a tetrafluoroethylene-hexafluoropropylene copolymer.

As to the use amount of the active metal catalyst, a range of from 0.03 to 10 $mg/cm^2$ is suitable from the viewpoints of cell output and economy. The amount of the conductive material for carrying the active metal catalyst is suitably from 1 to 10 times the mass of the active metal catalyst.

The conductive layer is also called an electrode substrate, a transmission layer or a backing layer, has a collection function and plays a role for preventing deterioration of the gas transmission to be caused due to gathering of water. In general, a material prepared by using carbon paper or a carbon cloth and treating it with polytetrafluoroethylene (PTFE) for the purpose of making it water-repellent can be used, too.

Examples of a method for carrying the active metal catalyst include a heat reduction method, a sputtering method, a pulse laser deposition method and a vacuum vapor deposition method (see, for example, WO 2002/054514).

Next, a preparation method of an anode electrode and a cathode electrode is described. A dispersion (catalyst layer coating solution) prepared by using the ion exchangeable polymer particle dispersion liquid of the invention and

mixing with the active metal catalyst-carried conductive material is dispersed.

Examples of the solvent of the dispersion which is preferably used include heterocyclic compounds (for example, 3-methyl-2-oxazolidinone and N-methylpyrrolidone); cyclic ethers (for example, dioxane and tetrahydrofuran); chain ethers (for example, diethyl ether, ethylene glycol dialkyl ethers, propylene glycol dialkyl ethers, polyethylene glycol dialkyl ethers and polypropylene glycol dialkyl ethers); alcohols (for example, methanol, ethanol, isopropanol, ethylene glycol monoalkyl ethers, propylene glycol monoalkyl ethers, polyethylene glycol monoalkyl ethers and polypropylene glycol monoalkyl ethers); polyhydric alcohols (for example, ethylene glycol, propylene glycol, polyethylene glycol, polypropylene glycol and glycerin) ; nitrile compounds (for example, acetonitrile, glutarodinitrile, methoxyacetonitrile, propionitrile and benzonitrile); non-polar solvents (for example, toluene and xylene) ; chlorine based solvents (for example, methylene chloride and ethylene chloride); amides (for example, N,N-dimethylformamide, N,N-dimethylacetamide and acetamide); and water. Of these, heterocyclic compounds, alcohols, polyhydric alcohols and amides are especially preferably used.

In general, mixing is carried out such that the ion exchangeable polymer particle in the ion exchangeable polymer particle dispersion liquid of the invention is contained in a proportion of 0.2 to 3 times the amount of the active metal catalyst in the active metal catalyst-carried conductive material in terms of a weight ratio.

The dispersion may be carried out by stirring, and ultrasonic dispersion, a ball mill and the like may also be used. The resulting dispersion liquid may be coated by using a coating method such as a curtain coating, extrusion coating, roll coating, spin coating, dip coating, bar coating, spray coating, slide coating and print coating methods.

Coating of the dispersion liquid will be described. In a coating process, a film may be formed by extrusion molding, or casting or coating of the above-described dispersion liquid. A support in this case is not particularly restricted, and preferable examples thereof include a glass substrate, a metal substrate, a polymer film, a reflection board and the like. Examples of the polymer film include a film of cellulose-based polymers such as triacetyl cellulose (TAC), ester-based polymers such as polyethylene terephthalate (PET) and polyethylene naphthalate (PEN), fluorine-containing polymers such as polytrifluoroethylene (PTFE), and polyimide. The coating may be carried out according to a known system such as a curtain coating, extrusion coating, roll coating, spin coating, dip coating, bar coating, spray coating, slide coating and print coating methods. In particular, use of a conductive porous material (carbon paper, carbon cloth) as the support makes direct manufacture of the catalyst electrode possible.

These operations may be carried out by a film-forming machine that uses rolls such as calendar rolls or cast rolls, or a T die, or press molding by a press machine may also be utilized. Further, a stretching process may be added to control the film thickness or improve film characteristics. As another method, a method, in which an electrode catalyst having been formed in a paste shape as described above is directly sprayed to the solid electrolyte film with an ordinary sprayer to form the catalyst layer, can be also used. Control of the spray time and the spray volume makes formation of a uniform electrode catalyst layer possible.

Drying temperature in the coating process relates to the drying speed, and can be selected in accordance with properties of the material. It is preferably -20°C to 150°C, more preferable 20°C to 120°C, and further preferably 50°C to 100°C. A shorter drying time is preferable from the viewpoint of productivity, however, a too short time tends to easily generate such defects as bubbles or surface irregularity. Therefore, drying time of 1 minute to 48 hours is preferable, 5 minutes to 10 hours is more preferable, and 10 minutes to 5 hours is further preferable. Control of humidity is also important, and relative humidity (RH) is preferably 25 to 100%, and more preferably 50 to 95%.

The coating liquid (dispersion liquid) in the coating process preferably contains a small amount of metal ions, and in particular, it contains a small amount of transition metal ions, especially an iron, nickel and cobalt ions. The content of transition metal ions is preferably 500 ppm or less, and more preferably 100 ppm or less. Therefore, solvents used in the aforementioned processes preferably contains these ions in a small amount, too.

Further, a surface treatment may be carried out after performing the coating process. As to the surface treatment, surface roughening, surface cutting, surface removing or surface coating may be performed, which may, in some cases, improve adherence with the solid electrolyte film or the porous conductive material.

Thickness of the catalyst layer included in the MEA of the invention is preferably 5 to 200 μm, and particularly preferably 10 to 100 μm.

In the production method of the membrane and electrode assembly, for example, the electrolyte membrane is assembled with the catalyst layer, the conductive layer and the like to prepare MEA. The preparation is not particularly limited, but known methods can be applied.

For manufacturing the MEA, following 4 methods are preferable.

(1) Proton conductive material coating method: wherein a catalyst paste (ink) containing an active platinum-carrying carbon, the ionic polymer particle of the invention as a proton conductive material and a solvent as fundamental components is directly coated on both sides of the solid electrolyte, to which porous conductive sheets are thermal compression-bonded (hot pressed) to manufacture an MEA of 5-layer structure.

(2) Porous conductive sheet coating method: wherein the catalyst paste is coated on the surface of the porous

conductive sheet to form a catalyst layer, followed by thermal compression-bonding (hot pressing) with the electrolyte membrane to manufacture an MEA of 5-layer structure. This method is the same as the above-described (1) except that the type of support to be coated is not identical.

(3) Decal method: wherein the catalyst paste is coated on a support (such as a polytetrafluoroethylene (PTFE) sheet) to form a catalyst layer, followed by theremal compression-bonding (hot pressing) to transfer the catalyst layer alone to the electrolyte membrane to form a 3-layer MEA, to which a porous conductive sheet is pressure-bonded to manufacture an MEA of 5-layer structure.

(4) Later catalyst carrying method: wherein an ink, in which a carbon substance not carrying a platinum powder has been mixed with a proton conductive material, is coated on a solid electrolyte, a porous conductive sheet or PTFE to form a film, followed by impregnating platinum ions into the solid electrolyte and reducing the ion to precipitate a platinum powder in the film, thereby forming a catalyst layer. After the formation of the catalyst layer, an MEA is manufactured by the aforementioned methods (1) to(3).

The above-described hot press is preferably carried out under following conditions.

The electrolyte membrane may be of a proton type having a sulfonic acid as a substituent, or of a salt type having a salt of sulfonic acid as described in JP-A-2004-165096 and JP-A-2005-190702. The counter cation of a salt type sulfonic acid is preferably a mono- or di-valent cation, and more preferably a monovalent cation. Specifically, lithium ion, sodium ion, potassium ion or magnesium ion is preferable. Further, plural types may be employed from the group consisting of these cations and a proton. Sodium salt and potassium salt are even more preferable.

When the above-described salt is used, in addition, the following process is necessary.

In order to use it for a fuel cell, the solid electrolyte must have proton conductivity. For the purpose, by contacting the solid electrolyte with an acid, a salt substitution percentage thereof is reduced to 99% or less of that before the contact. Contact with an acid after joining the electrode catalyst and the polymer electrolyte film can recover lowering in moisture content and ion conductivity of the film caused by thermal history that is given during the electrode joining.

As a method for contacting with an acid, known methods such as immersion with or spraying an acidic aqueous solution such as hydrochloric acid, sulfuric acid, nitric acid and an organic sulfonic acid can be employed. Of these, the immersion method is preferable because it is simple and easy. A method of using a mineral acid such as hydrochloric acid, sulfuric acid and nitric acid is also preferable. A concentration of the acidic aqueous solution relies upon a state of lowering of ionic conductivity, an immersion temperature, an immersion time, etc. For example, an acidic aqueous solution of from 0.0001 to 5 N can be favorably used, with the range of from 0.1 to 2 N being especially preferable. In many cases, when the immersion temperature is room temperature, the conversion can be thoroughly achieved. In case of shortening the immersion time, the acidic aqueous solution may be heated. In that case, the temperature is preferably in the range of from 30 to 100°C, and more preferably in the range of from 50 to 95°C. The immersion time relies upon the concentration and immersion temperature of the acidic aqueous solution, and the immersion can be favorably carried out for from about 10 minutes to 24 hours. From the viewpoint of productivity, the immersion time is preferably not more than 6 hours, and especially preferably not more than 4 hours. The amount of impurities contained in this acidic aqueous solution is preferably not more than 1 % by weight, and more preferably not more than 0.1% by weight.

Such method may be also employed that a proton moving in the inside of the film functions as an acid upon operating a fuel cell to wash out a substituted cation, thereby allowing the film to exert a higher ion conductivity. A method for producing the fuel cell using the electrolyte membrane produced by such method is described.

The polymer electrolyte fuel cell is configured by stacking a plural number of single cells via a cooling plate etc. , wherein the single cell is that a fuel distribution plate and an oxidant distribution plate as a groove-provided collector for forming a fuel channel and an oxidant channel are disposed outside the thus formed assembly of an electrolyte membrane as formed as above-described and an electrode. Of these, the collector (bipolar plate) is a graphite-made or metal-made channel forming material-cum-collector having a gas channel on the surface thereof, etc. A fuel cell stack can be prepared by inserting an assembly of an electrolyte membrane and a gas diffusion electrode between such collectors and piling a plural number of the resulting materials.

In general, single cell voltage of a fuel cell is 1.2 V or less, therefore, single cells are used in series stacking in accordance with necessary voltage required from load. As to the stacking method, there are 2 usable methods, that is, "planar stacking" wherein single cells are aligned on a plane and "bipolar stacking" wherein single cells are stacked via a separator having fuel paths formed on both sides thereof. The former is suitable for a compact fuel cell, because the cathode electrode side (air pole) is exposed on the surface, thereby making it easy to take in air and possible to form a thin type stacking. In addition to these, a method is proposed in which, while applying MEMS technology, microfabrication is given to a silicon wafer to form a stacking.

A higher operating temperature of a fuel cell is preferable, because catalyst activity enhances. But, ordinarily, it is operated at 50°C to 120°C, at which water content is easily controlled. Although a higher supply pressure of oxygen and hydrogen may be preferable because a fuel cell output increases, since probability of their contact through film breakage or the like also increases, the pressure is preferably controlled within a suitable range such as 1 to 3 atmospheric

pressures.

As to the fuel which can be used for the fuel cell, examples of an anode fuel include hydrogen, alcohols (for example, methanol, isopropanol and ethylene glycol), ethers (for example, dimethyl ether, dimethoxymethane and trimethoxymethane), forming acid, boron hydride complexes and ascorbic acid. Examples of a cathode fuel include oxygen (also including oxygen in the air) and hydrogen peroxide.

The method for supplying the foregoing anode fuel and cathode fuel into the respective catalyst layers includes two methods of (1) a method of forcedly circulating the fuel using an auxiliary machinery such as a pump (active type); and (2) a method not using an auxiliary machinery (for example, in case of a liquid, a capillary phenomenon or free drop; and in case of a gas, a passive type in which the catalyst layer is exposed to the air and the fuel is supplied). These methods can also be combined. While the former has advantages such as realization of a high output by pressurization and humidity control of a reaction gas or the like, it involves a drawback that it is difficult to achieve downsizing. While the latter has an advantage that downsizing is possible, it involves a drawback that a high output is hardly obtainable.

Various applications have been discussed about a fuel cell, including automobile use, household use and portable device use and the like. In particular, the hydrogen type fuel cell is expected as an energy source for various hot water-supplying and power generating apparatuses for home use, source of power for transport apparatuses, and an energy source for portable electronic devices, while utilizing the advantage of generating a high output. For example, the hot water-supplying and power generating apparatus to which it can be preferably applied includes home-use, collective housing-use and hospital-use apparatuses; the transport apparatus includes the automobile and marine vessel; and the portable device includes the cellular phone, mobile notebook computer and electronic still camera and the like. Examples of the suitably applicable portable device include a portable generator, outdoor lighting device and the like. In addition, it can preferably be used as a power source of a robot for industrial use or household use, or other toys and games. Furthermore, it is useful as a power source for charging a secondary battery mounted on these devices. In addition, an application as an emergency power source is also proposed.

## EXAMPLES

The present invention will be described more specifically below based on Examples. The material, use amount, percentage, treatment content, treatment procedure and the like represented in Examples below can be arbitrarily changed as long as the change results in no deviation from the intent of the invention. Accordingly, the scope of the invention is not restricted to the specific examples represented below.

### <<Preparation of ionic polymer>>

#### P-1

A sulfonated polysulfone electrolyte was obtained in the same manner as in the preparation of a solid electrolyte of Example 1 of JP-A-2006-344578.

#### P-2

A sulfonated polysulfone electrolyte was obtained in the same manner as in the preparation of a solid electrolyte of Example 3 of JP-A-2006-344578.

### <<Preparation of ionic polymer particle dispersion liquid>>

#### Examples 1 to 6

A poor solvent and an ionic polymer solution were continuously mixed to obtain an ionic polymer particle dispersion liquid. A solution obtained by dissolving the ionic polymer (P-1 or P-2) which is poorly soluble in water in N-methylpyrrolidone as a good solvent was used as the ionic polymer solution. Water was used as the poor solvent.

Specifically, the ionic polymer solution having an ionic polymer dissolved therein was supplied from an ionic polymer solution tank, and the poor solvent was supplied from a poor solvent tank. These were supplied at the same time, and the respective supply flow rates are shown in Table 1. Here, the ionic polymer solution was supplied at a temperature of 45°C, and the poor solvent was supplied at a temperature of 25°C.

By changing the flow rates of the solution and the poor solvent or the concentration of the solution, ionic polymer particle dispersion liquids as shown in Table 1 were obtained. The obtained ionic polymer particle dispersion liquids were each measured with respect to a volume average particle size by using a dynamic light scattering particle size distribution analyzer (LB-550 (a trade name) , manufactured by Horiba, Ltd.). The obtained results are also shown in

Table 1.

Table 1

| | Example 1 | Example 2 | Example 3 | Example 4 | Example 5 | Example 6 |
|---|---|---|---|---|---|---|
| Ionic polymer | P-1 | P-1 | P-1 | P-1 | P-2 | P-2 |
| Concentration of ionic polymer solution (% by mass) | 3.0 | 3.0 | 3.0 | 5.0 | 3.0 | 5.0 |
| Flow rate of good solvent (mL/min) | 50 | 21 | 10 | 21 | 21 | 21 |
| Flow rate of poor solvent (mL/min) | 50 | 50 | 50 | 50 | 50 | 50 |
| Particle size (μm) | 0.50 | 0.22 | 0.12 | 0.33 | 0.18 | 0.27 |

As is clear from Table 1, it was confirmed that even when any of P-1 or P-2 was used as the ionic polymer, an ionic polymer particle dispersion liquid could be produced by the production method of an ionic polymer particle dispersion liquid of the invention. Also, it was confirmed that the larger the flow rate of the poor solvent as compared with the flow rate of the ionic polymer solution, the smaller the ionic polymer particle can be made. Also, it was confirmed that the lower the concentration of the ionic polymer solution, the smaller the ionic polymer particle can be made. That is, it was understood that by adjusting the flow rate of the poor solvent and the concentration of the ionic polymer solution, the particle size of the ionic polymer can be adjusted.

Comparative Example 1

P-1 was dissolved in N-methylpyrrolidone as the good solvent in a concentration of 1.5 % by mass. This was measured by the foregoing dynamic light scattering particle size distribution analyzer. However, a polymer particle dispersion was not observed.

Example 7

<<Preparation of catalyst layer>>

After mixing 2 g of platinum-carried carbon (having 50 % by mass of platinum carried on Vulcan XC72) and 0.1 g of a polytetrafluoroethylene powder, 40 mL of the ionic polymer particle dispersion liquid as prepared in Example 2 was added, and the mixture was dispersed by an ultrasonic disperser for 30 minutes, thereby preparing a paste for catalyst layer. The obtained paste for catalyst layer was coated on a support having a reinforcing material incorporated therein (a polytetrafluoroethylene film (manufactured by Saint-Gobain K.K.)), dried and then punched out in a prescribed size, thereby preparing a catalyst layer. The coating amount was about 0.2 mg/cm$^2$ in terms of a carrying amount of platinum.

<<Fabrication of electrolyte membrane>>

The foregoing P-1 was dissolved in an N-methylpyrrolidone solvent in a concentration of 10 % by weight. This solution was spread on glass by spin coating, air dried and then dried in vacuo at 80°C, thereby preparing an electrolyte membrane M-1 having a thickness of 50 μm.

[Ionic conductivity]

The ionic conductivity was measured by employing a four-terminal alternating current method in conformity with Journal of the Electrochemical Society, Vol. 143, No. 4, pages 1254 to 1259 (1996). The electrolyte membrane M-1 was cut out in a length of 2 cm and a width of 1 cm; four platinum wires were fixed at intervals of 5 mm to a PTFE plate; the electrolyte membrane M-1 was placed thereon; and a tetrafluoroethylene resin (PTFE) was further stacked thereon, followed by screw fixing to build up a test cell. 1480 Model and 1255B Model, both of which are manufactured by Solartron, were combined as an impedance analyzer, and the measurement was carried out at a constant temperature and a constant humidity or in a constant-temperature water by means of an alternating current impedance method. The ionic conductivity was determined according to the following expression.

$$(\text{Ionic conductivity}) = (\text{Distance between measurement terminals}) / \{(\text{Resistance}) \times (\text{Thickness}) \times (\text{Width})\}$$

The electrolyte membrane M-1 for the measurement was previously protonated using a sulfuric acid aqueous solution.

<<Preparation of membrane and electrode assembly>>

The above-obtained catalyst layer was stuck on the both surfaces of the electrolyte membrane M-1 such that the coating surface of the paste for catalyst layer came into contact with the electrolyte membrane and subjected to thermal contact bonding, and after lowering the temperature while applying a pressure, the support having a reinforcing material incorporated therein was separated. Next, the salt in the electrolyte membrane M-1 was protonated using a sulfuric acid aqueous solution.

<<Properties of fuel battery>>

(1) Maximum output and output in high current density region:

An E-TEK's gas diffusion electrode (conductive layer) having been cut into the same size as the electrode was stacked on the above-obtained membrane and electrode assembly and set in a standard fuel cell test cell, manufactured by ElectroChem Incorporated, and the test cell was connected to a fuel cell evaluation system (As-510, manufactured by NF Corporation). A humidified hydrogen gas was flown on the anode electrode side; a humidified imitation air was flown on the cathode electrode side; and the system was operated until the voltage became stable. Thereafter, a load was applied between the anode electrode and the cathode electrode to record current-voltage properties. In all of the samples, an output was measured at a relative humidity within the cell of 100 % at a temperature within the cell of 80°C while setting up a hydrogen gas supply back pressure at 2 atmospheres and an imitation air gas supply back pressure at 2 atmospheres, respectively. With respect to the membrane and electrode assembly, a maximum output at 80°C and 100 % and an output in a high current density region at 1.0 A/cm$^2$ are shown in Table 2.

Example 8

A membrane and electrode assembly was prepared in the same manner as in Example 7, except that 80 mL of the ionic polymer particle dispersion liquid as prepared in Example 3 was added in place of the addition of 40 mL of the ionic polymer particle dispersion liquid as prepared in Example 2 which was used in the catalyst layer as prepared in Example 7.

Comparative Example 2

A membrane and electrode assembly was prepared in the same manner as in Example 7, except that 80 mL of the ionic polymer particle dispersion liquid as prepared in Comparative Example 1 was added in place of the addition of 40 mL of the ionic polymer particle dispersion liquid as prepared in Example 2 which was used in the catalyst layer as prepared in Example 7.

Comparative Example 3

A membrane and electrode assembly was prepared in the same manner as in Example 7, except that 15 mL of a NAFION (a registered trademark) solution (5 % by weight solution, manufactured by Aldrich) was added in place of the addition of 40 mL of the ionic polymer particle dispersion liquid in Example 2 which was used in the catalyst layer in Example 7.

Table 2

| | Example 7 | Example 8 | Comparative Example 2 | Comparative Example 3 |
|---|---|---|---|---|
| Ionic polymer | P-1 | P-1 | P-1 | NAFION |

(continued)

| | Example 7 | Example 8 | Comparative Example 2 | Comparative Example 3 |
|---|---|---|---|---|
| State | Dispersed state | Dispersed state | Dissolved | Dispersed state |
| Maximum output ($W/cm^2$) | 0.63 | 0.65 | 0.21 | 0.55 |
| Output in high current density region ($W/cm^2$) | 0.52 | 0.55 | 0 | 0.42 |

As is clear from Table 2, the membrane electrode assemblies using the ionic polymer particle dispersion liquid of the invention in the electrode exhibited a high output.

The electrode using the ionic polymer particle dispersion liquid of the invention is excellent in adhesion to an electrolyte membrane and enables one to prepare a polymer electrolyte fuel cell having an excellent power generating performance.

Furthermore, the fuel cell using the electrode of the invention has a possibility such that it is utilized for a cogeneration system, a fuel cell automobile, etc.

## Claims

1. A liquid dispersion comprising ionic polymer particles having a volume average particle size of from 1 nm to 200 nm, the dispersion being obtainable by continuously mixing water in which an ionic polymer has a solubility of not more than 10 mg/ml and an ionic polymer solution comprising the ionic polymer dissolved in an organic solvent miscible with water and in which the solubility of the ionic polymer is 20 mg/ml or more, to form ionic polymer particles, the ionic polymer being a hydrocarbon based polymer having an aromatic ring in its main chain and a sulfoalkyl group of formula $-(CH_2)_n-SO_3H$ wherein n is an integer of 1 to 6 in a side chain thereof.

2. A liquid dispersion according to Claim 1, wherein the addition flow rate of the water to the addition flow rate of the ionic polymer solution is 3 or more in terms of a volume flow rate ratio.

3. An electrode for a fuel cell using a liquid dispersion as defined in Claim 1 or Claim 2.

4. A membrane and electrode assembly comprising a pair of electrodes and an electrolyte membrane provided between the electrodes, the electrodes being the electrode for a fuel cell as defined in Claim 3.

5. A fuel cell using the membrane and electrode assembly as defined in Claim 4.

6. A method for producing a liquid dispersion comprising ionic polymer particles having a volume average particle size of from 1 nm to 200 nm, comprising the step of continuously mixing water in which an ionic polymer has a solubility of not more than 10 mg/ml and an ionic polymer solution comprising the ionic polymer dissolved in an organic solvent miscible with water and in which the solubility of the ionic polymer is 20 mg/ml or more, to form ionic polymer particles, the ionic polymer being a hydrocarbon based polymer having an aromatic ring in its main chain and a sulfoalkyl group of formula $-(CH_2)_n-SO_3H$ wherein n is an integer of 1 to 6 in a side chain thereof.

7. A method according to Claim 6, further comprising dispersing the ionic polymer particles for stabilization.

8. A method according to Claim 6 or Claim 7, further comprising concentrating the liquid dispersion.

## Patentansprüche

1. Flüssige Dispersion, die ionische Polymerpartikel mit einer volumengemittelten Partikelgröße von 1 nm bis 200 nm umfasst, die Dispersion durch kontinuierliches Mischen von Wasser erhältlich ist, in dem ein ionisches Polymer mit einer Löslichkeit von nicht mehr als 10 mg/ml und eine ionische Polymerlösung, die das ionische Polymer umfasst, in einem mit Wasser mischbaren organischen Lösungsmittel gelöst sind und in dem die Löslichkeit des ionischen Polymers 20 mg/ml oder mehr ist, wodurch ionische Polymerpartikel gebildet werden,

das ionische Polymer ein Kohlenwasserstoff-basiertes Polymer ist, das einen aromatischen Ring in dessen Hauptkette und eine Sulfoalkylgruppe der Formel $-(CH_2)_n-SO_3H$ in dessen Seitenkette aufweist, wobei n eine ganze Zahl von 1 bis 6 ist.

2. Flüssige Dispersion gemäß Anspruch 1, wobei der Zugabestrom des Wassers zum Zugabestrom der ionischen Polymerlösung bezogen auf ein Volumenstromverhältnis 3 oder mehr ist.

3. Elektrode für eine Brennstoffzelle, die eine flüssige Dispersion gemäß Anspruch 1 oder Anspruch 2 verwendet.

4. Membran und Elektrodenanordnung, die ein paar Elektroden und eine zwischen den Elektroden angeordnete Elektrolytmembran umfasst, und die Elektroden die Elektroden für eine Brennstoffzelle gemäß Anspruch 3 sind.

5. Brennstoffzelle, die die Membran und Elektrodenanordnung gemäß Anspruch 4 verwendet.

6. Verfahren zur Herstellung einer flüssigen Dispersion, die ionische Polymerpartikel mit einer volumengemittelten Partikelgröße von 1 nm bis 200 nm umfasst, welches den Schritt des kontinuierlichen Mischens in Wasser umfasst, in dem ein ionisches Polymer mit einer Löslichkeit von nicht mehr als 10 mg/ml und eine ionische Polymerlösung, die das ionische Polymer umfasst, in einem mit Wasser mischbaren organischen Lösungsmittel gelöst sind und in dem die Löslichkeit des ionisches Polymers 20 mg/ml oder mehr ist, wodurch ionische Polymerpartikel gebildet werden,
das ionische Polymer ein Kohlenwasserstoff-basiertes Polymer ist, das einen aromatischen Ring in dessen Hauptkette und eine Sulfoalkylgruppe der Formel $-(CH_2)_n-SO_3H$ in dessen Seitenkette aufweist, wobei n eine ganze Zahl von 1 bis 6 ist.

7. Verfahren gemäß Anspruch 6, welches weiterhin Dispergieren der ionischen Polymerpartikel zur Stabilisation umfasst.

8. Verfahren gemäß Anspruch 6 oder Anspruch 7, welches weiterhin Konzentrieren der flüssigen Dispersion umfasst.

## Revendications

1. Dispersion liquide comprenant des particules de polymère ionique ayant une taille de particule moyenne en volume comprise entre 1 nm et 200 nm, la dispersion pouvant être obtenue en mélangeant de manière continue de l'eau dans laquelle un polymère ionique a une solubilité non supérieure à 10 mg/ml et une solution de polymère ionique comprenant le polymère ionique dissous dans un solvant organique miscible avec de l'eau et dans laquelle la solubilité du polymère ionique est de 20 mg/ml ou davantage, pour former des particules de polymère ionique,
le polymère ionique étant un polymère à base d'hydrocarbure ayant un cycle aromatique dans sa chaîne principale et un groupe sulfoalkyle de formule $-(CH_2)_n-SO_3H$ dans laquelle n est un nombre entier de 1 à 6 dans une chaîne latérale de celui-ci.

2. Dispersion liquide selon la revendication 1, dans laquelle le débit d'addition de l'eau par rapport au débit d'addition de la solution de polymère ionique est de 3 ou davantage en termes de rapport de débits en volume.

3. Electrode pour une cellule à combustible utilisant une dispersion liquide telle que définie dans la revendication 1 ou la revendication 2.

4. Assemblage membrane-électrode comprenant une paire d'électrodes et une membrane électrolytique disposée entre les électrodes, les électrodes étant du type de l'électrode pour une cellule à combustible telle que définie dans la revendication 3.

5. Cellule à combustible utilisant l'assemblage membrane-électrode tel que défini dans la revendication 4.

6. Procédé pour produire une dispersion liquide comprenant des particules de polymère ionique ayant une taille de particule moyenne en volume comprise entre 1 nm et 200 nm, comprenant l'étape qui consiste à mélanger de manière continue de l'eau dans laquelle un polymère ionique a une solubilité non supérieure à 10 mg/ml et une solution de polymère ionique comprenant le polymère ionique dissous dans un solvant organique miscible avec de l'eau et dans laquelle la solubilité du polymère ionique est de 20 mg/ml ou davantage, pour former des particules

de polymère ionique,
le polymère ionique étant un polymère à base d'hydrocarbure ayant un cycle aromatique dans sa chaîne principale et un groupe sulfoalkyle de formule $-(CH_2)_n-SO_3H$ dans laquelle n est un nombre entier de 1 à 6 dans une chaîne latérale de celui-ci.

**7.** Procédé selon la revendication 6, comprenant en outre la dispersion des particules de polymère ionique à des fins de stabilisation.

**8.** Procédé selon la revendication 6 ou la revendication 7, comprenant en outre la concentration de la dispersion liquide.

Fig. 1

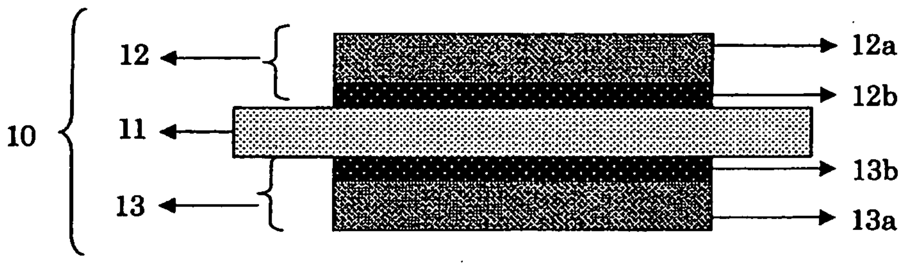

Fig.2

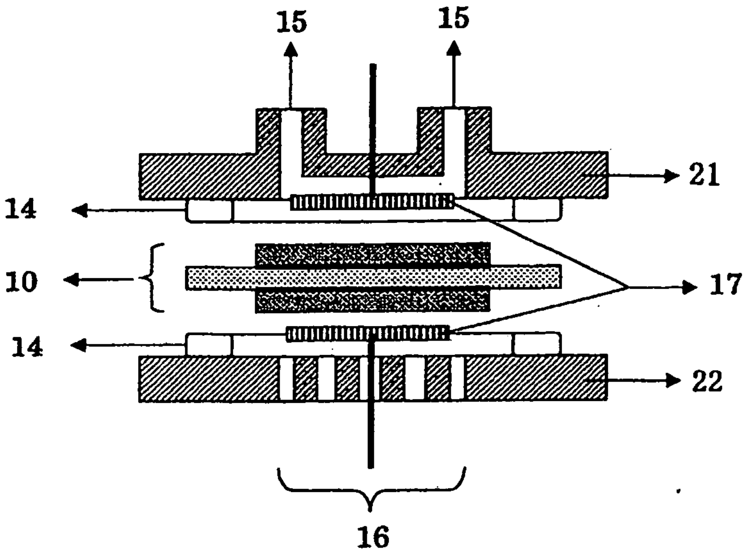

Fig. 3

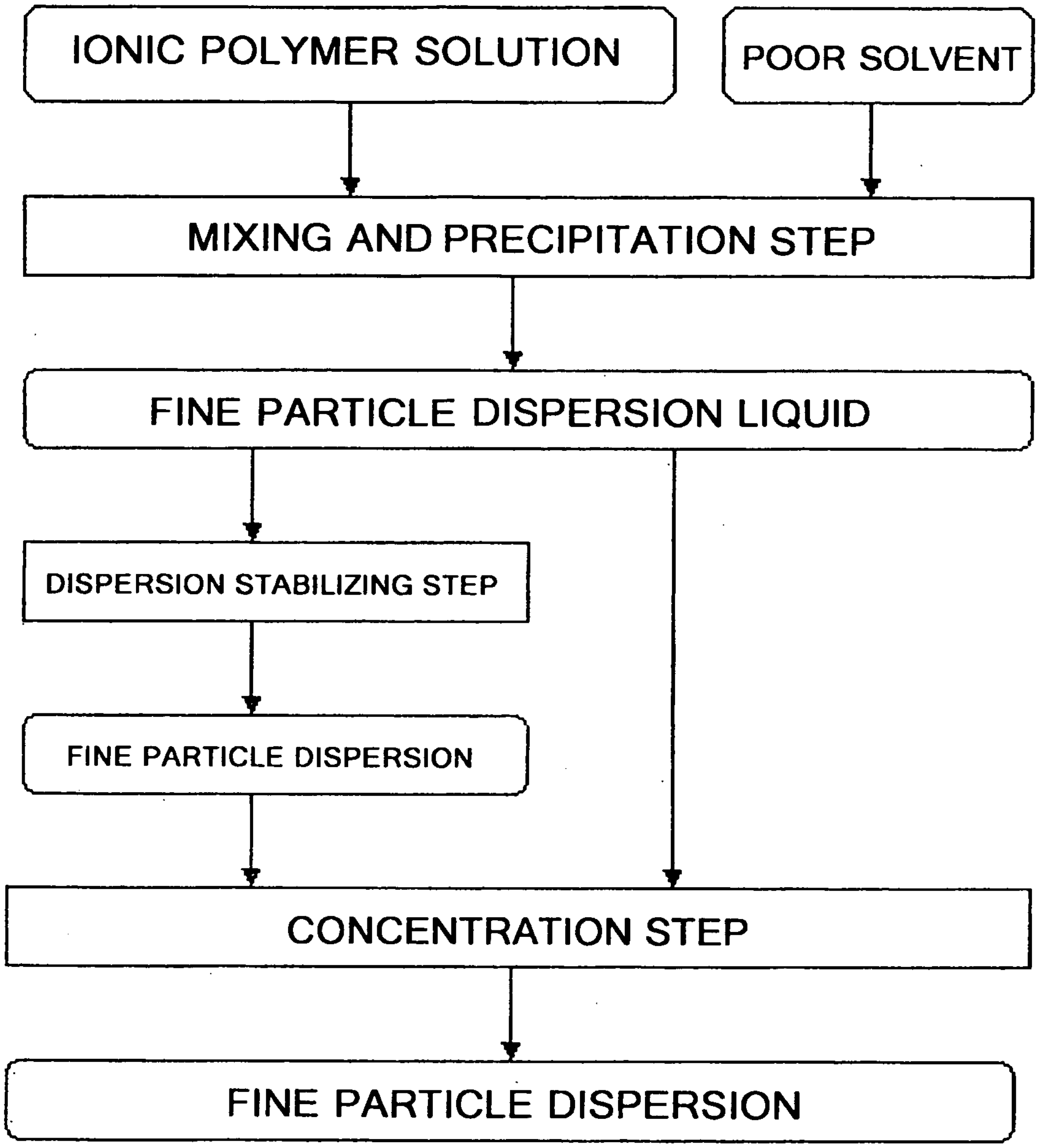
IONIC POLYMER SOLUTION
POOR SOLVENT
MIXING AND PRECIPITATION STEP
FINE PARTICLE DISPERSION LIQUID
DISPERSION STABILIZING STEP
FINE PARTICLE DISPERSION
CONCENTRATION STEP
FINE PARTICLE DISPERSION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5135785 A
- JP 2003055568 A
- JP 2004035864 A
- JP 2004075979 A
- JP 2004256711 A
- WO 2007067140 A
- US 5403675 A
- JP 9102322 A
- US 4012303 A
- US 4605685 A
- JP 1052866 B
- JP 8053614 A
- JP 10101873 A
- JP 11114430 A
- JP 2003151346 A
- JP 10312815 A
- JP 2000231928 A
- JP 2001307545 A
- JP 2003317748 A
- JP 2004063430 A
- JP 2004107461 A
- JP 6111834 A
- JP 2003178777 A
- JP 2004217921 A
- JP 7135003 A
- JP 8020716 A
- JP 9251857 A
- JP 2003197030 A
- JP 2003288916 A
- JP 2003317539 A
- WO 2002054514 A
- JP 2004165096 A
- JP 2005190702 A
- JP 2006344578 A


### Non-patent literature cited in the description


- *Journal of the Electrochemical Society,* 1996, vol. 143 (4), 1254-1259